# EUROPEAN PATENT SPECIFICATION

(11) **EP 2 994 515 B1**
(45) Date of publication and mention of the grant of the patent: **19.12.2018**
(21) Application number: 14718423.8
(22) Date of filing: 17.04.2014
(51) Int. Cl.: C09K 8/00, B65G 5/00, E21B 41/00, E21B 43/16

(54) **METHOD OF STORING CO2**
VERFAHREN ZUR LAGERUNG VON CO2
PROCÉDÉ DE STOCKAGE DE CO2

(30) Priority: 17.04.2013 WO PCT/EP2013/058031
(43) Date of publication of application: 16.03.2016
(73) Proprietor: Equinor Energy AS, 4035 Stavanger (NO)
(72) Inventor: NAZARIAN, Bamshad, N-7053 Ranheim (NO); RINGROSE, Philip Sefton, N-7059 Trondheim (NO)
(74) Representative: Dehns
(86) International application number: PCT/EP2014/057955
(87) International publication number: WO 2014/170455

(56) References cited:
- WO-A2-2012/041926
- US-A- 4 609 043
- US-A- 5 045 220
- US-A- 5 922 833

## Description

### Technical field

The present invention relates to a method of storing CO₂ in geological formations..

### Background of the invention

Several studies indicate that the increase of CO₂ in the atmosphere has a major effect on global climate. Optimized and safe storage of CO₂ is a desired and important issue in order to reduce CO₂ in the atmosphere.

As an example concerning commercial storage of CO₂, the Sleipner carbon capture and storage (CCS) project operated by Statoil is located 250 km off the Norwegian coast. The CO₂ is stored in supercritical state in the Utsira formation at a depth of 800-1000m below the sea surface. The CO₂ produced during natural gas processing is captured and subsequently injected underground. CO₂ injection started in October 1996 and by 2012, more than 13 million tons of CO₂ had been injected at a rate of approximately 2700 tons per day. A shallow long-reach well is used to take the CO₂ 2.4 km away from the producing wells and platform area. The injection site is located beneath a local dome of the top Utsira formation.

The In Salah CCS Project is an onshore project for the production of natural gas located in the Algerian Central Sahara. The Krechba Field produces natural gas containing up to 10% of CO₂ from a number of geological reservoirs. CO₂ has been stripped from the gas and re-injected into a sandstone reservoir at a depth of 1800m enabling the storage of up to 1 Mt of CO₂ per year.

While the global capacity to store CO₂ deep underground is believed to be large, the development of a new storage site is inevitably costly as it requires an assessment of potential risk to humans and the ecosystem. It is thus desirable that existing sites are exploited to maximum capacity. Current estimates suggest that the existing methods used to inject supercritical CO₂ into deep storage sites result in only around 2% of the pore volume of the geological storage site being utilized for CO₂ sequestration. This is believed to be due to the uneven sweep of the injected CO₂ in subterranean formations, which leads to a phenomenon called "fingering" in which the CO₂ injection front is highly uneven with small areas of high penetration surrounded by areas in which the CO₂ has not penetrated at all. Pursuing current practices will result in the loss of considerable storage volume in available storage sites.

For the purpose of sequestration, CO₂ is injected as a supercritical fluid into the storage reservoir, normally without designing the composition of the preferred phase of the injected stream at reservoir conditions. In WO 2012/041926, the Composition Swing Injection (CSI) technique is described, in which the composition of the injected stream is changed in cycles to create gas-like and liquid-like states in order to stabilize the CO₂ plume during the injection period. This stabilisation helps to maximise the CO₂ storage capacity of the reservoir.

Depending on pressure and temperature of the storage reservoir, achieving the required phase behaviour in the Composition Swing Injection (CSI) technique may require considerable modification of composition of the injected stream. One option disclosed in WO 2012/041926 is that various hydrocarbon components could be injected together with CO₂ in order to obtain the required effect. In some cases these hydrocarbon components could be available from natural sources or as a by-product of oil and gas processing. However, in other cases hydrocarbons may be too valuable to use as a gas blend component, and could result in Composition Swing Injection being economically undesirable.

There remains, therefore, a need to develop a method for storing CO₂ in storage reservoirs where the CSI technique is inexpensive and which overcomes the issues of loss of storage volume discussed above. It is also desirable to be able to monitor CO₂ storage reservoirs for CO₂ plume movement and possible CO₂ seepage through the storage reservoir. Moreover, it would be advantageous to develop an economically viable method for monitoring CO₂ levels. Ultimately, a method which is able to address both these problems simultaneously is desirable.

Surprisingly, the present inventors have found that methods utilising the Composition Swing Injection technique and in which the hydrocarbons are replaced by one or more CO₂ soluble polymers represent an attractive solution to these issues.

The use of CO₂ in enhanced oil recovery processes is disclosed in US 4609043 and US 5045220. These documents describe the addition of polymers to the CO₂, which is then added to the reservoir to displace the oil uniformly and thus aid recovery.

### Summary of the invention

The present invention is conceived to solve or at least alleviate the problems identified above. An object of the invention is to provide a method for storing CO₂ in geological formations in a flexible and economically acceptable manner.

In a first embodiment, the invention provides a method of storing CO₂ in a geological formation, said method comprising:
(i) Injecting a first composition comprising CO₂ into said formation; and
(ii) Injecting a second composition comprising CO₂ and at least one CO₂ soluble polymer into said formation,
wherein steps (i) and (ii) are performed separately and in any order, and wherein the first and second compositions are different.

### Detailed Description

"Supercritical conditions or near super-critical conditions" within the context of the present invention, shall be understood as the conditions in which a fluid is at a temperature or pressure at, above or near its critical point, where distinct liquid and gas phases do not exist. At super-critical or near super-critical conditions, the fluid is neither a gas nor a liquid but is in a phase which can have more gas-like or more liquid-like properties by virtue of its viscosity and density. Thus, a liquid can exist in different supercritical "phases". The different phases may be called gas-like or liquid-like phases. In addition, close to the critical point, small changes in pressure or temperature may result in large changes in phase properties, allowing the design of many phase properties of a supercritical fluid.

It is a preferable embodiment of the invention for any or all of the compositions to be at or near supercritical conditions. By "near supercritical conditions" it is meant that the fluid is at a temperature and pressure close to, but lower than its critical point. Typically, "near supercritical conditions" cover conditions in which the pressure may be up to 1000000 Pa (10 bar) less than the critical pressure and up to 5 °C less than the critical temperature. In the present invention supercritical conditions or near supercritical conditions are preferred so that the compositions can be injected with properties between those of a gas and a liquid, and further to be able to easily cycle between gas-like and liquid-like properties to obtain optimized storage.

"Monitoring" within the context of the present invention shall be understood as monitoring breakthrough of the injected CO₂ mixture at production or observation wells. In those embodiments relating to methods for monitoring CO₂, the at least one CO₂ soluble polymer according to the present invention is considered to possess a dual function with regard to phase behaviour for optimized storage and monitoring gas breakthrough in production or observation wells. "Dual function" within the context of the present invention shall be understood as the embodiment wherein the at least one CO₂ polymer acts as a tracer, enabling both optimized storage of CO₂ and monitoring of gas breakthrough in production or observation wells. Tracers are used in order to qualitatively or quantitatively gauge how fluid flows through the reservoir, as well as being a useful tool for estimating residual oil saturation. Tracers can be radioactive or chemical, gas or liquid.

"Geological formations" and "storage reservoirs" within the context of the present invention, shall be understood as relating to underground formations, storage reservoirs, geological reservoirs or formations consisting of a certain number of rock strata.

The "combined CO₂ composition" within the context of the present invention, shall be understood as a composition comprising CO₂ and the at least one CO₂ soluble polymer.

The CO₂ used in the methods and compositions of the present invention may come from any source, such as CO₂ capture processes, gas processing facilities or subterranean sources, each of which will be understood to provide slightly different CO₂ compositions. The CO₂ used in the methods and compositions herein may be substantially pure, i.e. it may consist of 100% pure CO₂ (or comprise 99.9% pure CO₂). Alternatively, the CO₂ may further comprise unavoidable impurities, such as hydrocarbons, e.g. alkanes, benzene and/or toluene. Where unavoidable impurities are present, the CO₂ used in the methods and composition of the present invention preferably comprises at least 90 mol%, more preferably at least 92 mol%, such as 95 mol% pure CO₂, especially at least 98 mol% pure CO₂ relative to the total amount of CO₂ and unavoidable impurities. A typical CO₂ feed stream, comprising such unavoidable impurities, is shown below:

| **Component** | **Mole fraction** |
|---|---|
| CO2 | 0.98382 |
| Methane | 0.01291 |
| Ethane | 0.00000 |
| Propane | 0.00066 |
| i-Butane | 0.00006 |
| n-Butane | 0.00011 |
| i-Pentane | 0.00000 |
| n-Pentane | 0.00000 |
| n-Hexane | 0.00003 |
| n-Heptane | 0.00133 |
| n-Octane | 0.00070 |
| n-Nonane | 0.00038 |

By "CO₂ soluble polymer", we mean a polymer which preferably has a solubility in CO₂, preferably supercritical CO₂, of at least 0.1 g/L at critical temperature and pressure.

In one embodiment the polymer-containing composition comprises at least one of the following: perfluorocarbons such as polyperfluoroether, polypropylene glycol, polyethylene glycol, monoethylene glycol, silicate containing compounds.

The present invention also comprises a method of storing CO₂ in a geological formation, said method comprising
(i) Injecting a first composition comprising CO₂ into said formation; and
(ii) Injecting a second composition comprising CO₂ and at least one CO₂ soluble polymer into said formation,
wherein steps (i) and (ii) are performed separately and in any order, and wherein the first and second compositions are different.

In all embodiments of the invention, steps (i) and (ii) are preferably performed sequentially such that step (ii) follows step (i). However, this is not essential and it is within the ambit of the invention for step (ii) to precede step (i).

Preferably, the first composition and/or the second composition are injected at or near supercritical conditions. Most preferably, both the first and second compositions are injected at or near supercritical conditions. The compositions may be compressed to assume a supercritical, or near supercritical state at the site of injection.

In all embodiments of the invention, it is preferable if the first composition is injected in a gas-like supercritical phase and the second composition is injected in a liquid-like supercritical phase.

In a preferred embodiment, the above-mentioned method comprises cycling alternately between step (i) and step (ii), i.e. step (i) is carried out, followed by step (ii), which is then followed by step (i), and so on. Preferably, at least 2 cycles of the method are carried out, more preferably at least 4, especially at least 6, wherein one cycle is understood to comprise performing steps (i) and (ii) once. Up to 1000 cycles may be performed, such as up to 750 (e.g. up to 500). It will be appreciated that the number of cycles will be determined by the nature of the geological formation and the size of the storage reservoir. In general, the cycles will be repeated until the storage capacity of the geological formation has been reached. It is not outside the methods of the invention for one or more additional steps to be carried out subsequent to steps (i) and (ii) and for these additional steps to be incorporated into the cycles.

The duration of the time period of the injection of the first composition, i.e. step (i), may be the same as the time period of the injection of the second composition, i.e. step (ii). Alternatively, the time periods may be different, e.g. the time period of the injection of the second composition may be shorter than the time period of the injection of the first composition, or vice versa. Also, the time period of injection of the first and second compositions may vary between cycles.

Preferably the time periods are each longer than one month, i.e. the time a composition is injected before it is changed is preferably longer than one month. The time periods may each be between one month and one year, preferably between one and six months, such as two to three months. For example, step (i) may be performed for two months and step (ii) for one month. In an alternative embodiment, steps (i) and (ii) are each carried out for one month.

The first composition comprises CO₂. Preferably, the first composition consists of CO₂ and any unavoidable impurities, if present. Thus, the first composition may consist of 100% pure CO₂ (or comprise 99.9% pure CO₂). Alternatively, the first composition may comprise at least 90 mol%, more preferably at least 92 mol%, such as 95 mol% pure CO₂, especially at least 98 mol% pure CO₂, with the remaining mol% being made up by any unavoidable impurities.

The CO₂ in the first composition and the second composition may come from two separate sources which provide different CO₂ containing compositions. For example, they may come from different CO₂ capture processes, gas processing facilities or subterranean sources which provide different CO₂ compositions. Alternatively and preferably, there may be a single source of CO₂ for both the first and second compositions (which may be pure CO₂ or CO₂ containing unavoidable impurities).

The second composition used in the methods of the invention comprises at least one CO₂ soluble polymer in addition to CO₂. Preferably, the second composition comprises CO₂ from the same source as the CO₂ in the first composition, however this is not necessary.

The second composition is different from the first composition. The second composition comprises at least one CO₂ soluble polymer. A mixture of more than one CO₂ soluble polymer may be used, such as a mixture or two to five polymers, however it is preferable if the second composition comprises only one CO₂ soluble polymer.

The CO₂ soluble polymer(s) used in the methods of the current invention may be any polymer which is soluble in CO₂, preferably under supercritical conditions, and which results in an increase in the viscosity and/or density of the CO₂ once added thereto.

Preferably, the CO₂ soluble polymer(s) has a weight average molecular weight (Mw) of at least 10,000 g/mol, preferably at least 50,000 g/mol, more preferably at least 80,000 g/mol, such as at least 100,000 g/mol, especially at least 200,000 g/mol, e.g. at least 500,000 g/mol. Preferably, the weight average molecular weight of the CO₂ soluble polymer(s) is less than 2,000,000 g/mol, preferably less than 1,500,000 g/mol, such as less than 1,000,000 g/mol, e.g. less than 950,000 g/mol. Preferably, the CO₂ soluble polymer(s) has a number average molecular weight (Mn) of at least 10,000 g/mol, preferably at least 25,000 g/mol, such as at least 50,000 g/mol, especially at least 100,000 g/mol, e.g. at least 200,000 g/mol. Preferably, the number average molecular weight of the CO₂ soluble polymer(s) is less than 1,500,000 g/mol, preferably less than 1,000,000 g/mol, such as less than 800,000 g/mol, e.g. less than 750,000 g/mol.

The CO₂ soluble polymer(s) may contain one or more polymer components, i.e. can be unimodal or multimodal, e.g. bimodal, with respect to molecular weight distribution (MWD) and/or comonomer distribution. The polymer may be a homopolymer or a copolymer. The CO₂ soluble polymer may comprise at least one electron donor group, such as siloxane, ether, thioether, sulfone, carbonyl, ester, tertiary amine, dialkylamide or silylether. Preferable polymers are selected from the group consisting of polyolefins such as polyethylene, polypropylene, polybutene, polydecene-1 and polyisobutylene; polyurethanes; polyvinyl esters; polyvinyl ethers; silicon-containing polymers such as polysiloxanes, including polydimethyl siloxane; fluoropolymers such as fluoroalkyl polymers, fluoroethers, polyperfluoroether and fluoroacrylates; perfluorocarbons; and polyalkylene glycols such as polyethylene glycol and polypropylene glycol.

By "polyethylene glycol" (PEG) we mean any polymer containing mostly ethylene oxide repeating units, i.e. -CH₂-CH₂-O- units. By the term "polypropylene glycol" (PPG) we mean any polymer containing mostly propylene oxide repeating units, i.e. - CH₂-CH₂-CH₂-O- units. The polyalkylene glycols may have a hydroxy or amino end group, or a mixture thereof.

Where the CO₂ soluble polymer(s) is a copolymer, it comprises at least one comonomer. As is well known "comonomer" refers to copolymerisable comonomer units. The comonomer may be a polar comonomer containing at least one of the following functional groups: hydroxyl groups, alkoxy groups, carbonyl groups, carboxyl groups, ether groups or ester groups. Preferably, polar comonomers include acrylate(s), methacrylate(s) or acetate(s), or any mixtures thereof, more preferably alkyl acrylates, alkyl methacrylates or vinyl acetate, or a mixture thereof. Further preferably, said polar comonomers are selected from C1- to C6-alkyl acrylates, C1- to C6-alkyl methacrylates or vinyl acetate. Alternatively, the comonomer may be non-polar, such as olefins, preferably alpha-olefins, more preferably C3 to C10 alpha-olefins, such as propylene, 1-butene, 1-hexene, 4-methyl-1-pentene, styrene, 1-octene or 1-nonene.

If the CO₂ soluble polymer is a copolymer, it is preferred that it includes 0.001 to 50 wt% of one or more comonomers, relative to the total weight of the CO₂ soluble polymer as a whole, more preferably 0.1 to 40 wt%, still more preferably less than 35 wt%, still more preferably less than 30 wt%, more preferably less than 25 wt%, of one or more comonomers.

Particular preferred CO₂ soluble polymers include fluoroacrylate copolymers such as a fluoroacrylate-styrene copolymer. In another preferred embodiment, the at least one CO₂ soluble polymer is a perfluorocarbon or a fluoropolymer such as polyperfluoroether or a fluoroacrylate. When the second composition comprises at least one perfluorocarbon, it may possess dual function and act as a tracer to monitor for gas breakthrough.

In all embodiments of the invention, the second composition preferably comprises 0.1 to 50 weight % of the at least one CO₂ soluble polymer relative to the total weight of the second composition as a whole, such as 0.1 to 40 weight%; 0.1 to 30 weight%; 0.1 to 20 weight%; 0.1 to 15 weight%; 0.1 to 10 weight%; 0.1- 4 weight%; 0.1- 0.5 weight%; 0.5 to 20 wt%, or 0.75 to 10wt%, especially 1 to 4 wt%. It will be understood that theses weight percentage values relate to the total amount of CO₂ soluble polymers in the second composition. The particular weight percentage of the at least one CO₂ soluble polymer may be chosen according to the nature of the polymer(s) used and the geological formation. The skilled man will appreciate that, depending on the nature and size of the reservoir a particular change in viscosity and/or density may be desired through addition of the at least one CO₂ soluble polymer. Moreover, it will be appreciated that the solubility of the at least one CO₂ soluble polymer will vary depending on the polymer, or mixture of polymers, used. It is possible that a polymer with higher solubility would lead to a large increase in viscosity and/or density when added in very small amounts. However, for the same increase in viscosity and/or density, higher amounts of a less soluble polymer may be required.

Preferably, the second composition comprises 50-99.9 wt% of CO₂ relative to the total weight of the second composition as a whole, such as 80-99.5wt%, or 90-99.25wt%, especially 96-99 wt%. It will be understood that theses weight percentage values for CO₂ in the second composition are intended to cover CO₂ in addition to any unavoidable impurities which may be present in the CO₂.

In addition to CO₂ and the at least one CO₂ soluble polymer, the second composition used in the methods of the invention may comprise additional components such as nanoparticles or solvents. The role of the solvents may be to enhance the solubility of the CO₂ soluble polymer. Preferably, the solvents are organic solvents. Example solvents include toluene, ethanol, isooctane and 2-ethyl hexanol. These additional components may be present in an amount of 0.01 to 25 wt%, such as 0.05 to 20 wt%, especially 0.1 to 10 wt%, such as 0.5 to 5 wt%, e.g. 1wt% , relative to the total weight of the second composition as a whole.

As discussed above, the addition of at least one CO₂ soluble polymer to CO₂ results in a change in viscosity and/or density of the composition relative to an identical composition where no CO₂ soluble polymer has been added. In particular, the addition of at least one CO₂ soluble polymer to CO₂ results in an increase in viscosity and/or density, compared to CO₂ prior to the addition of the polymer. At supercritical conditions, this may lead to the transformation from a gas-like phase to a liquid-like phase. By increasing the density and/or viscosity a more compact plume is created after injection.

Thus, in a method according to the invention, the second composition preferably has a higher density and/or viscosity than the first composition. In particular, it is preferable if the viscosity of the second composition is at least 2 to 200 fold, such as 2-150, 2-100, 2-50, 2-40, 2-30 or 2-20 fold, greater than that of the first composition. The density of the second composition may be at least double or triple that of the first composition. Increasing the viscosity of the combined CO₂ containing composition by addition of at least one CO₂ soluble polymer changes the flow behaviour of the combined composition, for example from a gas-like flow to a liquid-like flow or vice versa. Furthermore, a stabilized Composition Swing Injection (CSI) front is obtained providing improved reservoir sweep by reducing the fingering phenomena.

Whilst the addition of the at least one CO₂ soluble polymer may cause significant enough changes in viscosity and/or density for the first composition to be in a gas-like supercritical phase and the second composition to be in a liquid-like supercritical phase, it will be understood that this is not essential and that these properties of the first and second compositions may be further modified by varying one or more injection parameters. The injection parameters may include the injection temperature or injection pressure.

In addition to the nature of the composition being changed between steps (i) and (ii), the temperature and/or pressure of the first and second compositions may also be different. This means that the properties, e.g. density and/or viscosity, may further be tailored between the two injection steps, i.e. steps (i) and (ii). Alternatively, the pressure and temperature at which the first and second compositions are injected may be relatively constant, i.e. the same.

In the present invention supercritical conditions or near-supercritical conditions are obtained by cycling between at least two sets of injection parameters. According to the present invention the injection parameters include at least one of the following: the injection temperature, injection pressure, hydrocarbon concentration and concentration of CO₂ soluble polymer composition. In addition the present method comprises a CO₂ containing composition which is mixed with at least a CO₂ soluble polymer; said composition is cycled between at least two sets of injection parameters prior to injection of said composition into said formation at or near supercritical conditions.

In the present invention optimized storage and control of CO₂ is achieved by cycling between the injection of CO₂ and CO₂ together with at least one CO₂ soluble polymer. The result is one which maximizes the storage capacity of the geological formation.

Furthermore, the compositions of the present invention described above can be used for monitoring CO₂ storage in geological formations, wherein the CO₂ soluble polymer is a tracer. In the present invention a composition comprising at least one CO₂ soluble polymer and CO₂ containing composition at or near supercritical conditions may possess a dual use, thus helping to achieve optimal storage and providing gas breakthrough analysis for reservoir management.

In a further embodiment, the invention provides a method of monitoring CO₂ storage in a geological formation, comprising
(i) Injecting a first composition comprising CO₂ into said formation;
(ii) Injecting a second composition comprising CO₂ and at least one CO₂ soluble polymer into said formation;
wherein steps (i) and (ii) are performed separately and in any order and
wherein said first and second compositions are different; and
(iii) Monitoring the stored CO₂,

Preferable embodiments for the method of monitoring CO₂, such as the nature of the first and second compositions and the nature of the at least one CO₂ soluble polymer, are as defined above for the methods of storing CO₂. Monitoring may take place by any method known in the art, such as *via* production or observation wells or by wellhead or downhole monitoring.

The addition of at least one CO₂ soluble polymer to CO₂ according to the methods of the present invention surprisingly creates a similar effect as the addition of intermediate or heavier hydrocarbons and thus extends the Compositional Swing Injection technique into a novel technical perspective and provides an economically viable alternative

In the present invention, at least one CO₂ soluble polymer is added to the injection stream as a substitute for intermediate and heavy hydrocarbons in order to achieve the required phase behaviour in the Composition Swing Injection technique. The presence of the CO₂ soluble polymer increases the viscosity and/or density of the second composition relative to the first composition. By increasing the density and/or viscosity of the combined CO₂ composition, the gravity override of the injected stream is reduced and a more compact CO₂ plume is resulted. The amount of CO₂ reaching the top of the storage reservoir is reduced and the safety of the injection project is increased

In one embodiment of the present invention a CO₂ soluble polymer is cyclically mixed with a CO₂-rich gas/liquid stream composition according to the present method before being injected into the underground (geological formation) in order to control the movement of the CO₂ plume and to increase the sweep and consequently the storage efficiency.

The injection cycle of composition with gas-like and liquid-like behaviour can vary but a typical injection cycle will comprise one month or two months of liquid-like injection, where the CO₂ soluble polymer is added, followed by one month of gas-like injection wherein a CO₂ soluble polymer is not added. The cost of adding the polymer is offset against the added effectiveness of CO₂ storage using this technique.

The capacity, flexibility and optimization of the CO₂ storage sites surprisingly increases considerably upon implementing the present invention also named as the CO₂ Thickener Composition Swing Injection (CTCSI) technique, reducing the total cost of the CO₂ Capture and Storage (CCS). The Composition Swing Injection technique using CO₂ soluble polymers may be cheaper to implement than conventional methods since the use of valuable hydrocarbons may be avoided.

Furthermore, the added CO₂ soluble polymer may also be used as a CO₂-soluble tracer for reservoir management, as already used in some conventional CO₂ storage sites, for example polyperfluoroether used at the In Salah project. CO₂ soluble polymers may therefore have a dual use for helping to optimise storage and for monitoring gas breakthrough analysis in the reservoir.

### Summary of the drawing

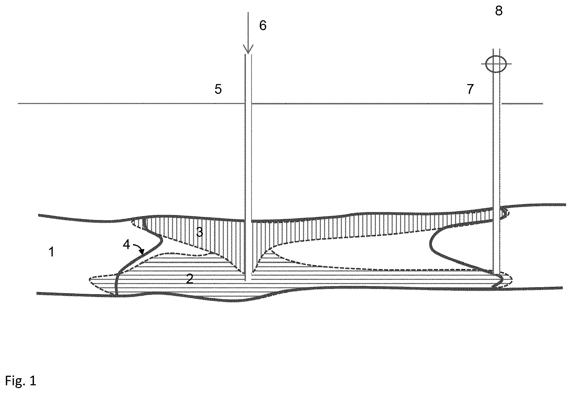

The invention will be described in detail with reference to the attached figure. It is to be understood that the drawing is designed solely for the purpose of illustration and is not intended as a definition of the limit of the invention for which reference should be made to the appended claims. It should be understood that the drawing is not necessarily drawn to scale and that, unless otherwise indicated, they are merely intended to schematically illustrate the structures and procedures described hereinFigure 1 shows a schematic representation of an injection front formed according to the present invention. Figure 1 shows a simulation of the injection of a composition comprising at least one CO₂ soluble polymer and CO₂ at or near supercritical conditions in a geological formation (1). The characteristics of injection parameters are cycled between at least two sets of injection parameters prior to injection of said composition, resulting in among others density and/or viscosity of said composition being varied during injection. The composition is injected via an injection well (5) and a conduit (6) into the geological formation (1). The geological formation can also be understood as the storage reservoir. The composition is injected under two different sets of injection conditions, gas-like and liquid-like, resulting in two different phases, one comprising at least one CO₂ soluble polymer and one without (e.g. the first and second compositions according to the methods of the invention) When the injection parameters are cycled to give a higher viscosity and/or higher density said composition behaves more like a liquid. During injection of the liquid-like composition, the injected stream tends to occupy the lower areas (2) of the geological storage formation (2). Gas-like composition tends to occupy the upper areas (3) of the geological storage formation (2). The stabilised Compositional Swing Injection (CSI) front (4) is more uniform, and the storage capacity of the geological formation (1) increased. An observation well (7) can be used to observe changes in flow conditions in geological storage formation (2) over a period. Further a wellhead or down-hole monitoring of the composition (8) can be used in order to among others monitor and characterise the stabilized CSI front (4). Measuring the injection parameters such as temperature, pressure, and concentration of CO₂ soluble polymer composition, will ensure the accuracy of injection operation and thus a stabilized CSI front.

## Claims

1. A method of storing CO₂ in a geological formation, said method comprising:
(i) Injecting a first composition comprising CO₂ into said formation; and
(ii) Injecting a second composition comprising CO₂ and at least one CO₂ soluble polymer into said formation,
wherein steps (i) and (ii) are performed separately and in any order and wherein said first and second compositions are different.

2. A method as claimed in claim 1, wherein the first composition and/or the second composition are injected at or near supercritical conditions, wherein "near supercritical conditions" means that the first and/or the second composition is at a pressure up to 1000000 Pa (10 bar) less than its critical pressure and a temperature of up to 5 °C less that its critical temperature.

3. A method as claimed in claim 1 or 2, wherein the first composition is injected in a gas-like supercritical phase and the second composition is injected in a liquid-like supercritical phase.

4. A method as claimed in any of claims 1 to 3, wherein the method comprises cycling alternately between step (i) and step (ii).

5. A method as claimed in claim 4, wherein the method comprises at least 2 cycles.

6. A method as claimed in any of claims 1 to 5, wherein each of steps (i) and (ii) are carried out for a time period of between one month and one year.

7. A method as claimed in any of claims 1 to 6, wherein step (i) is carried out for a time period of two months and step (ii) is carried out for a time period of one month.

8. A method as claimed in any of claims 1 to 7, wherein the at least one CO₂ soluble polymer has a weight average molecular weight of at least 10,000 g/mol.

9. A method as claimed in any of claims 1 to 8, wherein the at least one CO₂ soluble polymer is selected from the group consisting of polyolefins such as polyethylene, polypropylene, polybutene, polydecene-1 and polyisobutylene; polyurethanes; polyvinyl esters; polyvinyl ethers; silicon-containing polymers such as polysiloxanes, including polydimethyl siloxane; fluoropolymers such as fluoroalkyl polymers, fluoroethers, polyperfluoroether and fluoroacrylates; perfluorocarbons; and polyalkylene glycols such as polyethylene glycol and polypropylene glycol.

10. A method as claimed in any of claims 1 to 9, wherein the second composition comprises 0.1 to 50 wt% of the at least one CO₂ soluble polymer.

11. A method as claimed in any of claims 1 to 10, wherein the second composition comprises 50-99.9 wt% of CO₂.

12. A method as claimed in any of claims 1 to 11, wherein the first composition consists of CO₂ and any unavoidable impurities, wherein said unavoidable impurities are hydrocarbons.

13. A method as claimed in any of claims 1 to 12, wherein the viscosity of the second composition is 2-200 fold greater than that of the first composition.

14. A method as claimed in any of claims 1 to 13, further comprising the step:
(iii)Monitoring breakthrough of the stored CO₂.

## Patentansprüche

1. Verfahren zum Speichern von CO₂ in einer geologischen Formation, wobei das Verfahren umfasst:
(i) Injizieren einer ersten Zusammensetzung, die CO₂ umfasst, in die Formation; und
(ii) Injizieren einer zweiten Zusammensetzung, die CO₂ und mindestens ein CO₂-lösliches Polymer umfasst, in die Formation,
wobei Schritte (i) und (ii) getrennt und in einer beliebigen Reihenfolge durchgeführt werden und wobei die erste und die zweite Zusammensetzung verschieden sind.

2. Verfahren nach Anspruch 1, wobei die erste Zusammensetzung und/oder die zweite Zusammensetzung bei oder nahe überkritischen Bedingungen injiziert werden, wobei "nahe überkritischen Bedingungen" bedeutet, dass die erste und/oder die zweite Zusammensetzung bei einem Druck bis zu 1 000 000 Pa (10 bar) geringer als ihr kritischer Druck und einer Temperatur von bis zu 5 °C geringer als ihre kritische Temperatur vorliegt.

3. Verfahren nach Anspruch 1 oder 2, wobei die erste Zusammensetzung in einer gasähnlichen überkritischen Phase injiziert wird und die zweite Zusammensetzung in einer flüssigkeitsähnlichen überkritischen Phase injiziert wird.

4. Verfahren nach einem der Ansprüche 1 bis 3, wobei das Verfahren zyklisches Wechseln zwischen Schritt (i) und Schritt (ii) umfasst.

5. Verfahren nach Anspruch 4, wobei das Verfahren mindestens 2 Zyklen umfasst.

6. Verfahren nach einem der Ansprüche 1 bis 5, wobei jeder von Schritt (i) und (ii) für einen Zeitraum von zwischen einem Monat und einem Jahr durchgeführt wird.

7. Verfahren nach einem der Ansprüche 1 bis 6, wobei Schritt (i) für einen Zeitraum von zwei Monaten durchgeführt wird und Schritt (ii) für einen Zeitraum von einem Monat durchgeführt wird.

8. Verfahren nach einem der Ansprüche 1 bis 7, wobei das mindestens eine CO₂-lösliche Polymer ein Gewichtsmittel des Molekulargewichts von mindestens 10.000 g/Mol aufweist.

9. Verfahren nach einem der Ansprüche 1 bis 8, wobei das mindestens eine CO₂-lösliche Polymer ausgewählt ist aus der Gruppe, bestehend aus Polyolefinen wie Polyethylen, Polypropylen, Polybuten, Polydecen-1 und Polyisobutylen; Polyurethanen; Polyvinylestern; Polyvinylethern; Silicium enthaltenden Polymeren wie Polysiloxanen, einschließlich Polydimethylsiloxan; Fluorpolymeren wie Fluoralkylpolymeren, Fluorethern, Polyperfluorether und Fluoracrylaten; Perfluorcarbonen; und Polyalkylenglykolen wie Polyethylenglykol und Polypropylenglykol.

10. Verfahren nach einem der Ansprüche 1 bis 9, wobei die zweite Zusammensetzung 0,1 bis 50 Gew.-% des mindestens einen CO₂-löslichen Polymers umfasst.

11. Verfahren nach einem der Ansprüche 1 bis 10, wobei die zweite Zusammensetzung 50-99,9 Gew.-% CO₂ umfasst.

12. Verfahren nach einem der Ansprüche 1 bis 11, wobei die erste Zusammensetzung aus CO₂ und beliebigen unvermeidbaren Verunreinigungen besteht, wobei die unvermeidbaren Verunreinigungen Kohlenwasserstoffe sind.

13. Verfahren nach einem der Ansprüche 1 bis 12, wobei die Viskosität der zweiten Zusammensetzung 2-200fach größer als die der ersten Zusammensetzung ist.

14. Verfahren nach einem der Ansprüche 1 bis 13, weiter umfassend den Schritt:
(iii) Überwachen von Durchbruch des gespeicherten CO₂.

## Revendications

1. Procédé de stockage de CO₂ dans une formation géologique, ledit procédé comprenant :
(i) l'injection d'une première composition comprenant du CO₂ dans ladite formation ; et
(ii) l'injection d'une seconde composition comprenant du CO₂ et au moins un polymère soluble dans le CO₂ dans ladite formation,
dans lequel lesdites étapes (i) et (ii) sont réalisées séparément et dans n'importe quel ordre et dans lequel lesdites première et seconde compositions sont différentes.

2. Procédé selon la revendication 1, dans lequel la première composition et/ou la seconde composition sont injectées dans des conditions supercritiques ou presque supercritiques, dans lequel des « conditions presque supercritiques » signifient que la première et/ou la seconde composition sont à une pression jusqu'à 1 000 000 Pa (10 bar) inférieure à leur pression critique et à une température jusqu'à 5 °C inférieure à leur température critique.

3. Procédé selon la revendication 1 ou 2, dans lequel la première composition est injectée dans une phase supercritique de type gaz et la seconde composition est injectée dans une phase supercritique de type liquide.

4. Procédé selon l'une quelconque des revendications 1 à 3, dans lequel le procédé comprend le fait d'effectuer des cycles en alternant entre l'étape (i) et l'étape (ii).

5. Procédé selon la revendication 4, dans lequel le procédé comprend au moins 2 cycles.

6. Procédé selon l'une quelconque des revendications 1 à 5, dans lequel chacune des étapes (i) et (ii) est réalisée sur une période de temps entre un mois et un an.

7. Procédé selon l'une quelconque des revendications 1 à 6, dans lequel l'étape (i) est réalisée sur une période de temps de deux mois et l'étape (ii) est réalisée sur une période de temps d'un mois.

8. Procédé selon l'une quelconque des revendications 1 à 7, dans lequel l'au moins un polymère soluble dans le CO₂ a un poids moléculaire moyen en poids d'au moins 10 000 g/mole.

9. Procédé selon l'une quelconque des revendications 1 à 8, dans lequel l'au moins un polymère soluble dans le CO₂ est sélectionné à partir du groupe constitué de polyoléfines telles que le polyéthylène, le polypropylène, le polybutène, le polydécène-1 et le polyisobutylène ; de polyuréthanes ; d'esters polyvinyliques ; d'éthers polyvinyliques ; de polymères contenant du silicium tels que les polysiloxanes, y compris le polydiméthylsiloxane ; de fluoropolymères tels que les polymères de fluoroalkyle, les fluoroéthers, le polyperfluoroéther et les fluoroacrylates ; d'hydrocarbures perfluorés ; et de polyalkylènes glycols tels que le polyéthylène glycol et le polypropylène glycol.

10. Procédé selon l'une quelconque des revendications 1 à 9, dans lequel la seconde composition comprend 0,1 à 50% en poids de l'au moins un polymère soluble dans le CO₂.

11. Procédé selon l'une quelconque des revendications 1 à 10, dans lequel la seconde composition comprend 50 à 99,9 % en poids de CO₂.

12. Procédé selon l'une quelconque des revendications 1 à 11, dans lequel la première composition est constituée de CO₂ et de quelconques impuretés inévitables, dans lequel lesdites impuretés inévitables sont des hydrocarbures.

13. Procédé selon l'une quelconque des revendications 1 à 12, dans lequel la viscosité de la seconde composition est 2 à 200 fois supérieure à celle de la première composition.

14. Procédé selon l'une quelconque des revendications 1 à 13, comprenant en outre l'étape consistant à :
(iii) surveiller la percée du CO₂ stocké.
